# EUROPEAN PATENT SPECIFICATION

(11) **EP 4 344 040 B1**
(45) Date of publication and mention of the grant of the patent: **25.11.2026**
(21) Application number: 22196742.5
(22) Date of filing: 21.09.2022
(51) Int. Cl.: H02M 1/00, H02M 1/34, H02M 1/44, H02M 3/156

(54) **POWER CONVERTER FOR AT LEAST ONE LED, AND LED DRIVER**
STROMRICHTER FÜR MINDESTENS EINE LED UND LED-TREIBER
CONVERTISSEUR DE PUISSANCE POUR AU MOINS UNE DEL ET PILOTE DE DEL

(43) Date of publication of application: 27.03.2024
(73) Proprietor: Tridonic GmbH & Co. KG, 6851 Dornbirn (AT)
(72) Inventor: Saccavini, Lukas, 6850 Dornbirn (AT); Romano, Fabio, 6850 Dornbirn (AT); Stark, Stefan, 6850 Dornbirn (AT); Auer, Hans, 6850 Dornbirn (AT); Kucera, Clemens, 6850 Dornbirn (AT)
(74) Representative: Rupp, Christian

(56) References cited:
- EP-A1- 2 702 673
- EP-A1- 2 908 604
- EP-A1- 3 528 598
- GB-A- 2 507 982
- JP-A- 2015 002 015
- US-A1- 2009 295 301
- US-A1- 2014 218 978
- US-A1- 2015 236 597
- US-A1- 2022 255 422

## Description

### Technical Field

The present disclosure relates to a lighting technology and, in particular, to a power converter for at least one light-emitting device (LED), and to an LED driver comprising the power converter.

### Background Art

Power converters for LED lighting applications may be subject to different modes of operation depending on load conditions. For example, it may operate in a continuous conduction mode (CCM) in a high-load condition, and in a discontinuous conduction mode (DCM) in a light-load condition.

For instance, document US 2022/0255422 A1 relates to a PFC circuit and control method thereof. Said PFC circuit includes: a boost inductor, an auxiliary winding, an auxiliary switch tube, a main switch tube, a clamping capacitor, a series resistor and a control module; the boost inductor and the auxiliary winding have mutual inductance, a first terminal of the auxiliary winding is connected to a first terminal of the auxiliary switch tube, a second terminal of the auxiliary switch tube is connected to a first terminal of the clamping capacitor, a second terminal of the clamping capacitor is connected to a first terminal of the series resistor, and a second terminal of the series resistor is connected to a second terminal of the auxiliary winding; the main switch tube is connected between the boost inductor and the ground; and the control module is respectively connected to a control terminal of the main switch tube and a control terminal of the auxiliary switch tube.

Depending on the converter topology and circuitry, the light-load condition may entail an undesired frequency peak (i.e., resonant oscillation) in an electro-magnetic interference (EMI) spectrum.

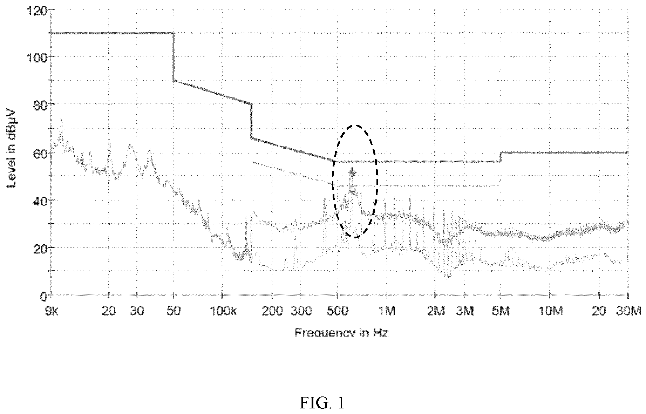

An illustrative example is shown in FIG. 1 (see dashed circle) for an exemplary power factor correction (PFC) boost converter being in a light-load condition (e.g., strong dimming). Due to the light load, a DCM mode sets in, which in turn gives rise to the undesired resonant oscillation once the inductor of the boost converter is fully discharged. For example, a drain-source capacity of a switch of the boost converter may resonate with the inductor.

Depending on a magnitude of the undesired resonant oscillation, an EMI filter may thus require re-dimensioning.

### Summary

In view of the above-mentioned drawbacks and limitations, an objective is to provide a power converter - and an LED driver based thereon - having an improved EMI spectrum under light-load conditions.

The objective is achieved by the embodiments as defined by the appended independent claims. Preferred embodiments are set forth in the dependent claims and in the following description and drawings.

A first aspect of the present disclosure relates to a power converter for at least one light-emitting device, LED. The converter comprises: an inductor, including inductively coupled main and auxiliary windings; an ohmic resistor and a shunt switch being connected in series with the auxiliary winding without a capacitor; and a control unit, being configured to actuate the shunt switch during a discharged state of the main winding.

The main winding and a boost diode may be connected in series between an input electric potential and an output electric potential of the converter; a boost switch may be connected between a common electric potential of the main winding and the boost diode and a reference electric potential of the converter; and the control unit may further be configured to intermittently actuate the boost switch in accordance with a constant output voltage control strategy.

The control unit may further be configured to intermittently actuate the boost switch in accordance with a power factor correction, PFC, control strategy.

The power converter may further comprise an electro-magnetic interference, EMI, filter being connected upstream of the main winding.

The discharged state of the main winding may start at a first zero-crossing of a current through the main winding after a preceding actuation of the boost switch.

The control unit may be configured to detect the first zero-crossing of the current through the main winding via sensing a current through the auxiliary winding.

The discharged state of the main winding may end a predefined lead time before a subsequent actuation of the boost switch.

A ratio of inductances of the main winding and the auxiliary winding may comprise: between 100 and 10.000, preferably between 500 and 2.000, and more preferably between 990 and 1.010.

The power converter may further comprise a rectification device being connected in series with the auxiliary winding.

The rectification device may comprise a diode.

The rectification device may comprise a rectifier bridge.

The shunt switch may comprise a solid-state semiconductor switch.

The boost switch may comprise a solid-state semiconductor switch.

A second aspect of the present disclosure relates to an LED driver, comprising a power converter of the first aspect or any of its implementations.

### Advantageous Effects

The present disclosure provides a power converter having an improved EMI spectrum under light-load conditions, by suppressing an undesired resonant oscillation (i.e., turning it into heat) rather than by filtering the same. This is acceptable in light-load conditions and avoids overdimensioning the converter's EMI filter, resulting in more cost-effective converters.

The technical effects and advantages described above in relation with the power converter equally apply to any LED driver comprising said power converter.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates an EMI spectrum for an exemplary PFC boost converter being in a light-load condition;
- FIGs. 2 - 4: respectively illustrate power converters in accordance with the present disclosure;
- FIG. 5: illustrates a working principle of the power converters of FIGs. 2 - 4; and
- FIGs. 6 - 7: illustrate simulation results confirming the working principle shown in FIG. 5.

### Detailed Descriptions of Drawings

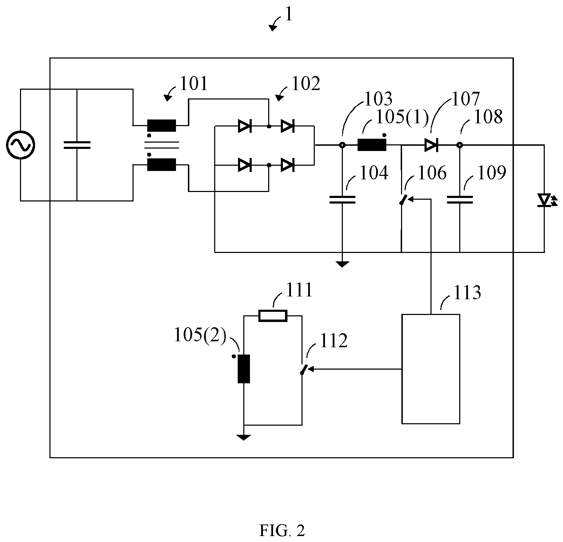

FIGs. 2 - 4 respectively illustrate power converters in accordance with the present disclosure.

The power converter 1 of FIG. 2 comprises an inductor 105, including inductively coupled main and auxiliary windings 1051, 1052.

An inductor as used herein may refer to an electronic component being capable of storing magnetic energy, using a coiled conductor arrangement ("winding") or the like.

A ratio of inductances of the main winding 1051 and the auxiliary winding 1052 may comprise between 100 and 10.000, preferably between 500 and 2.000, and more preferably between 990 and 1.010.

The main winding 1051 and a boost diode 107 may be connected in series between an input electric potential 103 and an output electric potential 108 of the converter 1.

A boost diode as used herein may refer to a diode having a power rating in accordance with a maximum and/or nominal power of the converter 1.

A boost switch 106 may be connected between a common electric potential of the main winding 1051 and the boost diode 107 and a reference electric potential (see earth / ground symbol) of the converter 1.

A boost switch as used herein may refer to a switch having a power rating in accordance with a maximum and/or nominal power of the converter 1.

The boost switch 106 may comprise a solid-state semiconductor switch, such as a metal-oxide semiconductor field-effect transistor (MOSFET).

The power converter 1 further comprises an ohmic resistor 111 and a shunt switch 112 being connected in series with the auxiliary winding 1052 without a capacitor.

An ohmic resistor as used herein may refer to an electronic component that implements an electrical resistance *R* for various purposes, such as turning electric power into heat.

The power converter 1 further comprises a control unit 113, such as a microprocessor (µP), an application-specific integrated circuit (ASIC), a field-programmable gate array (FPGA), and the like.

The control unit 113 may be configured to intermittently actuate 21 the boost switch 106 in accordance with a constant output voltage control strategy and/or an active PFC control strategy.

Power factor correction as used herein may refer to a maximization of a power factor of an attached load. The power factor (≤1) is defined as the ratio of the real power absorbed by the load to the apparent power flowing in the circuit. Active PFC is the use of power electronics to change the waveform of current drawn by the load to improve the power factor.

The control unit 113 is further configured to actuate 23 the shunt switch 112 during a discharged state of the main winding 1051.

A shunt switch as used herein may refer to a switch being capable of forming a low-impedance current path upon actuation.

The power converter 1 may further comprise an EMI filter 101 and/or a rectifier bridge 102 respectively being connected upstream of the main winding 1051.

A working principle of the sub-circuit 1052, 111, 112 of FIG. 2 is as follows:
Since the main and auxiliary windings 1051, 1052 are inductively coupled, any current through the main winding 1051 of the inductor 105 results in a current through its auxiliary winding 1052, in accordance with a ratio of their inductances (see above).

Generally, the ohmic resistor 111 having an electric resistance (e.g., *R* = *1 Ω*) is configured to turn electric power (*P = R· I²*) into heat, and an actuation 23 of the shunt switch 112 dictates when to turn the electric power into heat. As such, an actuation 23 of the shunt switch 112 during a discharged state of the main winding 1051 (i.e., when the undesired resonant oscillation emerges) dictates to particularly turn the electric power of the undesired resonant oscillation into heat.

The undesired resonant oscillation involves the inductor 105 (i.e., the main winding 1051), the smoothing capacitor 104 and in particular a parasitic capacity of the boost switch 106 (e.g., a drain-source capacity in case of a MOSFET). As soon as the main winding 1051 is fully discharged, the remaining energy starts flowing between the smoothing capacitor 104 and the parasitic capacity of the boost switch 106 back and forth, supported by the inductor 105.

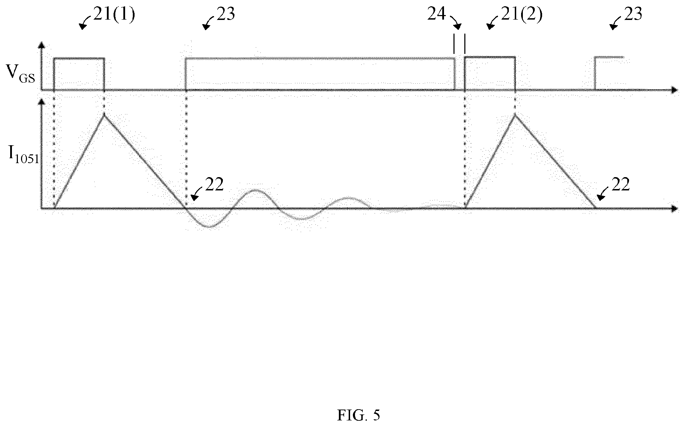

A timing of the discharged state of the main winding 1051 will be explained in more detail in connection with FIG. 5 below.

An LED driver (not shown) comprising the power converter 1 of FIG. 2 may be directly connected to an alternating current (AC) power source at its input port (to the left of FIG. 2) an to at least one LED at its output port (to the right of FIG. 2). Optionally, an intervening DC/DC converter (not shown) may be arranged between the output port of the power converter 1 and the at least one LED.

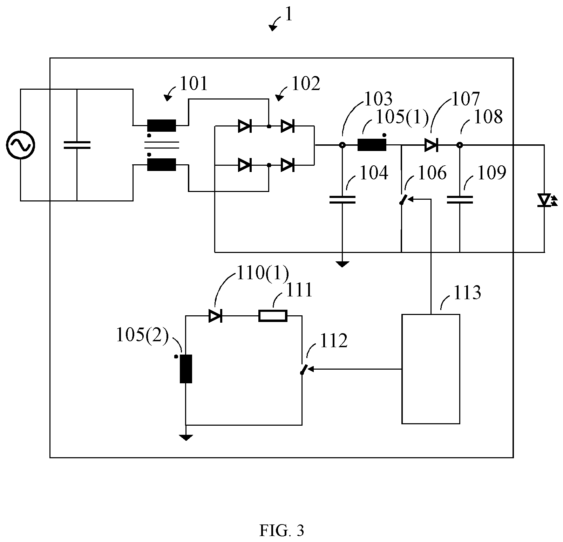

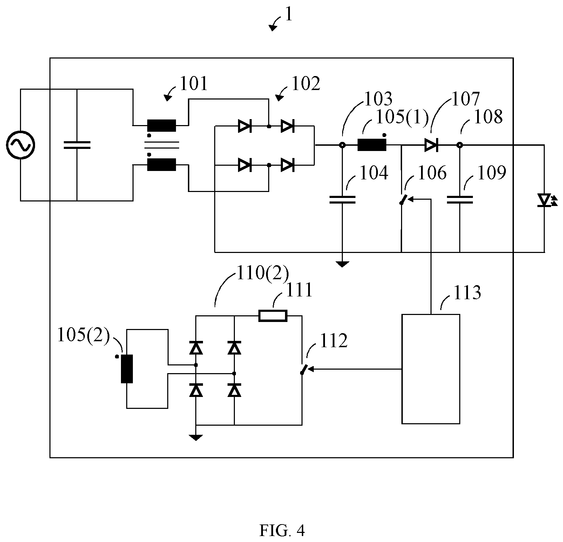

With regard to the power converter 1 of FIG. 2, the implementations of FIGs. 3 and 4 additionally comprise a rectification device 110 being connected in series with the auxiliary winding 1052 (and the ohmic resistor 111).

In accordance with FIG. 3, the rectification device 110 may comprise a diode 1101, acting as a half-wave rectifier. The shunt switch 112 may comprise a solid-state semiconductor switch, such as a metal-oxide semiconductor field-effect transistor (MOSFET).

In accordance with FIG. 4, the rectification device 110 may comprise a rectifier bridge 1102, acting as a full-wave rectifier. Again, the shunt switch 112 may comprise a solid-state semiconductor switch. In connection with full-wave rectification, turning the resonant oscillation into heat may take less time relative to half-wave rectification.

FIG. 5 illustrates a working principle of the power converters of FIGs. 2 - 4.

The upper graph of FIG. 5 schematically shows intermittent actuations 21 of the boost switch 106, by applying an appropriate drive voltage (V_{GS}).

As used herein, actuating / actuation may refer to a closed / conducting state of the respective switch.

In turn, the current through the main winding 1051 of the inductor 105 starts increasing linearly, in accordance with its inductance and the applied voltage (i.e., the difference of the input electrical potential 103 and the reference electrical potential of the converter 1).

Upon conclusion of the actuation 21 of the boost switch 106, the current through the main winding 1051 of the inductor 105 starts decreasing linearly, and vanishes at the first zero-crossing 22 of said current through the main winding 1051, as shown in the lower graph of FIG. 5.

The discharged state of the main winding 1051 may start at said first zero-crossing 22 after a preceding actuation 21, 211 of the boost switch 106 (subsequent zero-crossings are likely).

The control unit 113 may be configured to detect the first zero-crossing 22 of the current through the main winding 1051 via sensing a current through the auxiliary winding 1052. In other words, an existing circuit 1052, 111 for sensing of zero-crossings may be extended with at least the shunt switch 112 and a corresponding control/drive logic to eliminate undesired resonant oscillations.

In accordance with the upper graph of FIG. 5, the discharged state of the main winding 1051 may end a predefined lead time 24 before a subsequent actuation 21, 212 of the boost switch 106.

As such, the upper graph of FIG. 5 schematically shows potential actuations 23 of the shunt switch 112, by applying an appropriate drive voltage, during the discharged state of the main winding 1051.

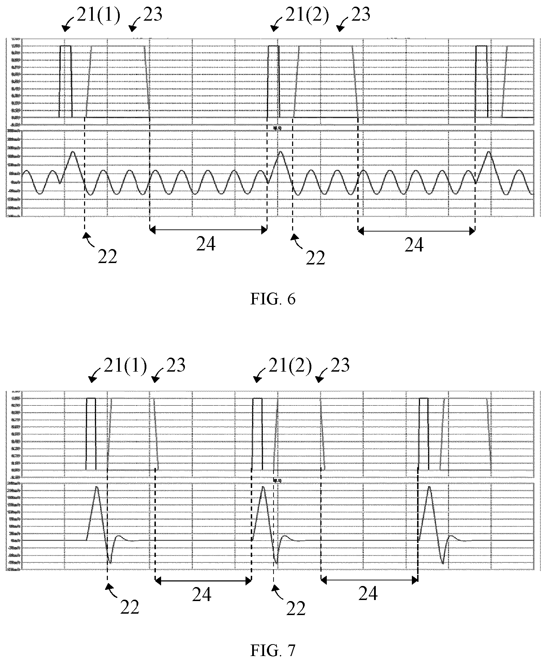

FIGs. 6 - 7 illustrate simulation results confirming the working principle shown in FIG. 5.

FIG. 6 represents the case wherein no actuations 23 of the shunt switch 112 have taken place yet, and the undesired resonant oscillation occurs during the discharged state of the main winding 1051. As such, the simulation result of FIG. 6 substantially corresponds to the representation of the working principle outlined in FIG. 5.

By contrast, FIG. 7 represents the case wherein actuations 23 of the shunt switch 112 actually take turns with the intermittent actuations 21 of the boost switch 106. According to the simulation result, the undesired resonant oscillation emerging during the discharged state of the main winding 1051 is effectively eliminated by turning it into heat.

## Claims

1. A power converter (1) for at least one light-emitting device, LED, comprising
an inductor (105), including inductively coupled main and auxiliary windings (1051, 1052);
an ohmic resistor (111) and a shunt switch (112) being connected in series with the auxiliary winding (1052) without a capacitor; and
a control unit (113), being configured to actuate (23) the shunt switch (112) during a discharged state of the main winding (1051).

2. The power converter (1) of claim 1,
the main winding (1051) and a boost diode (107) being connected in series between an input electric potential (103) and an output electric potential (108) of the converter (1);
a boost switch (106) being connected between a common electric potential of the main winding (1051) and the boost diode (107) and a reference electric potential of the converter (1); and
the control unit (113) further being configured to intermittently actuate (21) the boost switch (106) in accordance with a constant output voltage control strategy.

3. The power converter (1) of claim 2,
the control unit (113) further being configured to intermittently actuate the boost switch (106) in accordance with a power factor correction, PFC, control strategy.

4. The power converter (1) of claim 3, further comprising
an electro-magnetic interference, EMI, filter (101) being connected upstream of the main winding (1051).

5. The power converter (1) of any one of the claims 2 to 4,
the discharged state of the main winding (1051) starting at a first zero-crossing (22) of a current through the main winding (1051) after a preceding actuation (21, 211) of the boost switch (106).

6. The power converter (1) of claim 5,
the control unit (113) being configured to detect the first zero-crossing (22) of the current through the main winding (1051) via sensing a current through the auxiliary winding (1052).

7. The power converter (1) of any one of the claims 2 to 6,
the discharged state of the main winding (1051) ending a predefined lead time (24) before a subsequent actuation (21, 212) of the boost switch (106).

8. The power converter (1) of any one of the claims 1 to 7,
a ratio of inductances of the main winding (1051) and the auxiliary winding (1052) comprising
between 100 and 10.000,
preferably between 500 and 2.000, and
more preferably between 990 and 1.010.

9. The power converter (1) of any one of the claims 1 to 8, further comprising
a rectification device (110) being connected in series with the auxiliary winding (1052).

10. The power converter (1) of claim 9,
the rectification device (110) comprising a diode (1101).

11. The power converter (1) of claim 9,
the rectification device (110) comprising a rectifier bridge (1102).

12. The power converter (1) of claim 10 or claim 11,
the shunt switch (112) comprising a solid-state semiconductor switch.

13. The power converter (1) of any one of the claims 2 to 12,
the boost switch (106) comprising a solid-state semiconductor switch.

14. An LED driver, comprising
a power converter (1) of any one of the preceding claims.

## Patentansprüche

1. Leistungswandler (1) für mindestens eine lichtemittierende Vorrichtung, LED, umfassend eine Induktivität (105), umfassend induktiv gekoppelte Haupt- und Hilfswicklungen (1051, 1052); einen ohmschen Widerstand (111) und einen Shunt-Schalter (112), die ohne einen Kondensator in Reihe mit der Hilfswicklung (1052) geschaltet sind; und eine Steuereinheit (113), die dazu eingerichtet ist, den Shunt-Schalter (112) während eines entladenen Zustands der Hauptwicklung (1051) anzusteuern (23).

2. Leistungswandler (1) nach Anspruch 1, wobei die Hauptwicklung (1051) und eine Hochsetzdiode (107) zwischen einem elektrischen Eingangspotential (103) und einem elektrischen Ausgangspotential (108) des Leistungswandlers (1) in Reihe geschaltet sind; ein Hochsetzschalter (106) zwischen einem gemeinsamen elektrischen Potential der Hauptwicklung (1051) und der Hochsetzdiode (107) und einem elektrischen Referenzpotential des Leistungswandlers (1) geschaltet ist; und die Steuereinheit (113) ferner dazu eingerichtet ist, den Hochsetzschalter (106) gemäß einer Regelstrategie für eine konstante Ausgangsspannung intermittierend anzusteuern (21).

3. Leistungswandler (1) nach Anspruch 2, wobei die Steuereinheit (113) ferner dazu eingerichtet ist, den Hochsetzschalter (106) gemäß einer Strategie zur Leistungsfaktorkorrektur, PFC, intermittierend anzusteuern.

4. Leistungswandler (1) nach Anspruch 3, ferner umfassend einen Filter (101) für elektromagnetische Interferenzen, EMI, der der Hauptwicklung (1051) vorgeschaltet ist.

5. Leistungswandler (1) nach einem der Ansprüche 2 bis 4, wobei der entladene Zustand der Hauptwicklung (1051) bei einem ersten Nulldurchgang (22) eines Stroms durch die Hauptwicklung (1051) nach einer vorhergehenden Ansteuerung (21, 211) des Hochsetzschalters (106) beginnt.

6. Leistungswandler (1) nach Anspruch 5, wobei die Steuereinheit (113) dazu eingerichtet ist, den ersten Nulldurchgang (22) des Stroms durch die Hauptwicklung (1051) durch Erfassen eines Stroms durch die Hilfswicklung (1052) zu erfassen.

7. Leistungswandler (1) nach einem der Ansprüche 2 bis 6, wobei der entladene Zustand der Hauptwicklung (1051) eine vordefinierte Vorlaufzeit (24) vor einer nachfolgenden Ansteuerung (21, 212) des Hochsetzschalters (106) endet.

8. Leistungswandler (1) nach einem der Ansprüche 1 bis 7, wobei ein Verhältnis der Induktivitäten der Hauptwicklung (1051) und der Hilfswicklung (1052) zwischen 100 und 10.000, vorzugsweise zwischen 500 und 2.000 und besonders bevorzugt zwischen 990 und 1.010 liegt.

9. Leistungswandler (1) nach einem der Ansprüche 1 bis 8, ferner umfassend eine Gleichrichtungsvorrichtung (110), die in Reihe mit der Hilfswicklung (1052) geschaltet ist.

10. Leistungswandler (1) nach Anspruch 9, wobei die Gleichrichtungsvorrichtung (110) eine Diode (1101) umfasst.

11. Leistungswandler (1) nach Anspruch 9, wobei die Gleichrichtungsvorrichtung (110) eine Gleichrichterbrücke (1102) umfasst.

12. Leistungswandler (1) nach Anspruch 10 oder Anspruch 11, wobei der Shunt-Schalter (112) einen Festkörper-Halbleiterschalter umfasst.

13. Leistungswandler (1) nach einem der Ansprüche 2 bis 12, wobei der Hochsetzschalter (106) einen Festkörper-Halbleiterschalter umfasst.

14. LED-Treiber, umfassend einen Leistungswandler (1) nach einem der vorhergehenden Ansprüche.

## Revendications

1. Convertisseur de puissance (1) pour au moins un dispositif électroluminescent, LED, comprenant une inductance (105), comprenant des enroulements principal et auxiliaire (1051, 1052) couplés inductivement; une résistance ohmique (111) et un commutateur shunt (112) connectés en série avec l'enroulement auxiliaire (1052) sans condensateur; et une unité de commande (113) configurée pour actionner (23) le commutateur shunt (112) pendant un état déchargé de l'enroulement principal (1051).

2. Convertisseur de puissance (1) selon la revendication 1, dans lequel l'enroulement principal (1051) et une diode élévatrice (107) sont connectés en série entre un potentiel électrique d'entrée (103) et un potentiel électrique de sortie (108) du convertisseur (1); un commutateur élévateur (106) est connecté entre un potentiel électrique commun de l'enroulement principal (1051) et de la diode élévatrice (107) et un potentiel électrique de référence du convertisseur (1); et l'unité de commande (113) est en outre configurée pour actionner (21) de manière intermittente le commutateur élévateur (106) conformément à une stratégie de régulation à tension de sortie constante.

3. Convertisseur de puissance (1) selon la revendication 2, dans lequel l'unité de commande (113) est en outre configurée pour actionner de manière intermittente le commutateur élévateur (106) conformément à une stratégie de commande de correction du facteur de puissance, PFC.

4. Convertisseur de puissance (1) selon la revendication 3, comprenant en outre un filtre (101) d'interférences électromagnétiques, EMI, connecté en amont de l'enroulement principal (1051).

5. Convertisseur de puissance (1) selon l'une quelconque des revendications 2 à 4, dans lequel l'état déchargé de l'enroulement principal (1051) commence à un premier passage par zéro (22) d'un courant traversant l'enroulement principal (1051) après un actionnement précédent (21, 211) du commutateur élévateur (106).

6. Convertisseur de puissance (1) selon la revendication 5, dans lequel l'unité de commande (113) est configurée pour détecter le premier passage par zéro (22) du courant traversant l'enroulement principal (1051) par détection d'un courant traversant l'enroulement auxiliaire (1052).

7. Convertisseur de puissance (1) selon l'une quelconque des revendications 2 à 6, dans lequel l'état déchargé de l'enroulement principal (1051) se termine un temps d'avance prédéfini (24) avant un actionnement ultérieur (21, 212) du commutateur élévateur (106).

8. Convertisseur de puissance (1) selon l'une quelconque des revendications 1 à 7, dans lequel un rapport des inductances de l'enroulement principal (1051) et de l'enroulement auxiliaire (1052) est compris entre 100 et 10 000, de préférence entre 500 et 2 000, et plus préférablement entre 990 et 1 010.

9. Convertisseur de puissance (1) selon l'une quelconque des revendications 1 à 8, comprenant en outre un dispositif de redressement (110) connecté en série avec l'enroulement auxiliaire (1052).

10. Convertisseur de puissance (1) selon la revendication 9, dans lequel le dispositif de redressement (110) comprend une diode (1101).

11. Convertisseur de puissance (1) selon la revendication 9, dans lequel le dispositif de redressement (110) comprend un pont redresseur (1102).

12. Convertisseur de puissance (1) selon la revendication 10 ou la revendication 11, dans lequel le commutateur shunt (112) comprend un commutateur à semi-conducteur à l'état solide.

13. Convertisseur de puissance (1) selon l'une quelconque des revendications 2 à 12, dans lequel le commutateur élévateur (106) comprend un commutateur à semi-conducteur à l'état solide.

14. Pilote de LED, comprenant un convertisseur de puissance (1) selon l'une quelconque des revendications précédentes.
